Europäisches Patentamt

European Patent Office

Office européen des brevets

(19)

(11) Veröffentlichungsnummer : **0 065 764**
**B1**

(12) **EUROPÄISCHE PATENTSCHRIFT**

(45) Veröffentlichungstag der Patentschrift :
26.03.86

(51) Int. Cl.⁴ : **H 04 L   1/04, H 04 B   7/12**

(21) Anmeldenummer : **82104421.1**

(22) Anmeldetag : **19.05.82**

(54) **Digitales Funksystem.**

(30) Priorität : **27.05.81 DE 3121146**

(43) Veröffentlichungstag der Anmeldung :
**01.12.82 Patentblatt 82/48**

(45) Bekanntmachung des Hinweises auf die Patenterteilung : **26.03.86 Patentblatt 86/13**

(84) Benannte Vertragsstaaten :
**AT CH FR GB IT LI NL SE**

(56) Entgegenhaltungen :
**EP-A- 0 033 256**
**DE-A- 1 491 966**
**GB-A-   845 847**
**GB-A- 1 060 173**
**GB-A- 1 180 763**
**US-A- 2 303 493**
**US-A- 2 529 667**
**US-A- 3 967 202**
**ELECTRONICS, Band 27, Nr. 8, August 1954, Seiten 158-161, New York, USA D.D. HOWARD: "Single-channel system of frequency diversity"**
**IEEE NATIONAL TELECOMMUNICATIONS CONFERENCE, 1.-3. Dezember 1975, New Orleans, Louisiana, USA, Conference Record, Band 2, Seiten 28-6 bis 28-9 R. JOST et al.: "Gated subcarrier sideband diversity modem for digital transmission"**

(73) Patentinhaber : **Siemens Aktiengesellschaft Berlin und München Wittelsbacherplatz 2 D-8000 München 2 (DE)**

(72) Erfinder : **Schwarz, Wolfram, Dipl.-Ing. Backern 100 D-8084 Inning (DE)**
Erfinder : **Schwierz, Theodor, Dipl.-Ing. Riedweg 11 D-8890 Aichach (DE)**
Erfinder : **Sommer, Bernd, Dipl.-Ing. Riesheimer Strasse 28 D-8032 Lochham (DE)**

## Beschreibung

Die Erfindung bezieht sich auf ein digitales Funksystem, insbesondere für Troposcatter- und Kurzwellenverbindungen.

Selektive Fadings, verursacht durch Mehrwegeausbreitung, insbesondere bei Troposcatter- und Kurzwellenverbindungen, begrenzen die Verfügbarkeit solcher Strecken für die Übertragung von digitalen Nachrichten. Wie beispielsweise die DE-PS 26 28 997 zeigt, führen Mehrwegewellenausbreitungen bei der Übertragung digitaler frequenzmodulierter Datenströme, besonders bei Verwendung von Rundsstrahlantennen, unter bestimmten Umständen zu schwerwiegenden Empfangsstörungen. Die von der Sendeantenne abgestrahlten Wellenfronten treffen dabei auf Grund von Reflexionen aus verschiedenen Richtungen mit unterschiedlichen Laufzeiten auf die Empfangsantenne. Infolge der vektoriellen Addition dieser Wellenfronten erleidet die Antennenfußpunktspannung einen sowohl frequenzabhängigen als auch ortsabhängigen Amplituden- und Phasengang. Für viele Frequenzen und Orte bedeutet diese Energieverteilung infolge der durch sie verursachten Verzerrungen und Energieabsenkungen (Minima) den Verlust der Lesbarkeit digitaler Empfangssignale. Bei fest vorgegebenen Ortungspunkten von Sender und Empfänger ergibt die frequenzabhängige Energieverteilung eine Aufeinanderfolge von relativ schmalen Energieminimas und relativ breiten Energiemaximas. Der Frequenzabstand zwischen zwei aufeinander folgenden Maxima bzw. Minima wird dabei als Kohärenzbandbreite der Funkstrecke bezeichnet. Zur Sicherung der Nutzsignalübertragung ist es beispielsweise durch die DE-AS 25 58 557 bekannt, von sogenannten « Diversity-Maßnahmen » Gebrauch zu machen. Hierbei wird die Eigenschaft ausgenutzt, daß bei verschiedenen Radiofrequenzen nicht gleichzeitig der geschilderte Pegeleinbruch erfolgen wird (Frequenz-Diversity) und daher eine Parallelübertragung auf zwei oder mehr Frequenzen die Sicherheit gegen Ausfälle erhöht.

Durch die EP-A-0 033 256 wird zur Durchführung eines solchen Frequenz-Diversitybetriebs bei einem digitalen Funksystem vorgeschlagen, sendeseitig das digitale Nutzsignal zur Abstützung auf ein Frequenzraster mit wenigstens drei Radiofrequenzen zusammen mit wenigstens einer Zusatzschwingung, und zwar einer die Frequenz des Rasterabstandes im radiofrequenten Frequenzraster festlegenden Zusatzgrundschwingung, dem Eingang des Frequenzmodulators zuzuführen und auf diese Weise mehrere zueinander kohärente signalmodulierte radiofrequente Träger zu erhalten. Empfangsseitig werden die jeweils mit dem Nutzsignal modulierten radiofrequenten Träger des Frequenzrasters über einen Kombinator hinweg zu einem einen optimalen Signal-Geräuschabstand aufweisenden Summensignal wiederum zusammengefaßt.

Weiterhin ist es durch die Literaturstelle IEEE National Telecommunications Conference 1.-3. Dez. 1975, New Orleans, Lousiana, USA, Conference Record, Band 2, Seiten 28-6 bis 28-9 bekannt, dadurch mehrere zueinander kohärente signalmodulierte radiofrequente Träger zu erhalten, daß das sendeseitig anstehende zu übertragende digitale Nutzsignal zunächst in zwei Bitströme mit entsprechend niedrigerer Bitfolgefrequenz aufgeteilt wird und jeder dieser Bitströme dann einen Subträger moduliert. Auf der Ausgangsseite dieser Modulatoren werden die modulierten Subträger zu einem Summensignal zusammengefaßt, das dann als Modulationssignal für den eigentlichen radiofrequenten Träger unter Anwendung einer Phasenmodulation zur Verfügung steht. Diese Art der Doppelmodulation hat unter anderem den Zweck, die an sich benötigte Bandbreite für die Nutzsignalübertragung pro Träger um den Faktor 2 zu reduzieren. Abgesehen davon, daß diese Doppelmodulation einen relativ großen technischen Aufwand erfordert, müssen hier darüber hinaus die benötigten sendeseitigen Verstärker im Hinblick auf die den modulierten radiofrequenten Trägern mit aufmodulierte Amplitudenmodulation hochlineare Eigenschaften aufweisen.

Für die empfangsseitige Rückgewinnung des ursprünglichen Signals aus dem ankommenden modulierten Trägerfrequenzraster bestehen grundsätzlich zwei Möglichkeiten. Die eine Möglichkeit besteht darin, das ankommende nutzsignalmodulierte Frequenzraster zunächst in eine Zwischenfrequenzlage umzusetzen und anschließend jedes nutzsignalmodulierte Trägersignal für sich zu demodulieren, um die dann gewonnenen demodulierten Nutzsignale über einen Kombinator hinweg zum gewünschten optimierten Summensignal zusammenzufügen. Hiervon wird beim System nach der Literaturstelle EP 0 033 256 B1 Gebrauch gemacht.

Die zweite Möglichkeit, die durch die Literaturstelle GB-A-1 180 763 bekannt ist, besteht darin, jeden nutzsignalmodulierten ankommenden Träger in eine gleiche Zwischenfrequenzlage umzusetzen und dann in dieser Zwischenfrequenzlage über den ausgangsseitigen Kombinator das gewünschte Summensignal vor der eigentlichen Demodulation zu gewinnen.

Die geschilderten bekannten, von Frequenz-Diversity Gebrauch machenden Funksysteme sind hinsichtlich der Anzahl der Frequenzkanäle dann auf zwei bzw. drei Kanäle beschränkt, wenn, wie das wünschenswert ist, sämtliche Trägerfrequenzen des radiofrequenten Trägerspektrums wenigstens annähernd unter sich gleiche Amplituden aufweisen sollen. Werden hohe Anforderungen an die Betriebssicherheit der Signalübertragung gestellt, so kann dies durch eine Vergrößerung der Frequenzkanäle (Redundanz), beispielsweise fünf und mehr Kanäle, erfolgen.

Der Erfindung liegt die Aufgabe zugrunde, für ein mit Frequenz-Diversity ausgerüstetes Funksystem der letztgenannten Art eine spezielle Lösung anzugeben, die bei hohen Anforderungen an die Redundanz mit einem Minimum an hierfür erforderlichem technischen Aufwand auskommt.

Ausgehend von dem einleitend beschriebenen Funksystem wird diese Aufgabe gemäß der Erfindung durch die im Patentanspruch 1 angegebenen Merkmale gelöst.

Der Erfindung liegt die wesentliche Erkenntnis zugrunde, daß die Abstützung des zu übertragenden digitalen Nutzsignals auf ein Radiofrequenzraster von drei und mehr Radiotsrägerfrequenzen in außerordentlich einfacher Weise dadurch gewonnen werden kann, daß unter Beachtung der Besselfunktionen die Zusatzschwingung und weitere Zusatzoberschwingungen in der Amplitude, die Zusatzoberschwingungen zusätzlich auch in ihrer Phase einstellbar sind und daß ausschließlich von einer Frequenzmodulation Gebrauch gemacht wird. Gerade durch die letztgenannte Maßnahme läßt sich nämlich in außerordentlich vorteilhafter Weise im Zusammenhang mit den so eingestellten Zusatzschwingungen erreichen, daß das radiofrequente Summensignal eine Hüllkurve aufweist, die keine Amplitudenmodulationsanteile enthält. Dieses Signal kann nämlich, beispielsweise in einem nichtlinearen C-Verstärker, auf die nötige Sendeleistung verstärkt werden, ohne daß hierdurch Verzerrungseffekte zu befürchten sind. Auch an die Zwischenfrequenzverstärkerebene brauchen hier keine die Linearität betreffenden Anforderungen gestellt werden, da das umgesetzte Frequenzraster bzw. jede umgesetzte radiofrequente Trägerfrequenz ein reines FM-Signal ist. Die Verstärker können also sehr einfach ausgeführt sein und brauchen auch nicht für die Verarbeitung von Signalspitzen bemessen werden.

Zweckmäßige Ausgestaltungen des Erfindungsgegenstandes sind in den weiteren Patentansprüchen 2 bis 4 angegeben.

Wie weitere, der Erfindung zugrundeliegende Überlegungen ergeben haben, ist es sinnvoll, das radiofrequente Sendespektrum in seiner Breite in etwa gleich der halben auftretenden Kohärenzbandbreite zu wählen, weil dann mit Sicherheit erreicht ist, daß bei Auftreten eines durch Mehrwegeausbreitung auftretenden selektiven Pegeleinbruchs lediglich einer der radiofrequenten nutzsignalmodulierten Träger des Frequenzrasters erfaßt wird, während die restlichen nutzsignalmodulierten radiofrequenten Träger weitgehend ungestört bleiben. Dies ergibt sich dadurch, daß, wie schon einleitend darauf hingewiesen wurde, die Energieverteilung über der Frequenz bei Mehrwegeausbreitung relativ schmalbandig ausgebildete Pegelminima, jedoch relativ breit ausgebildete Pegelmaxima aufweist.

Anhand eines in der Zeichnung dargestellten Ausführungsbeispiels soll die Erfindung im folgenden noch näher erläutert werden.

In der Zeichnung bedeuten

Figur 1 das Blockschaltbild der Sendeseite eines Funksystems nach der Erfindung,

Figur 2 das Blockschaltbild der Empfangsseite eines Funksystems nach der Erfindung,

Figur 3 und 4 die Funktion des sendeseitigen Blockschaltbildes nach Fig. 1 näher erläuternde Frequenzdiagramme.

Figur 5 ein weiteres, die Wahrscheinlichkeitsfunktion des Empfangspegels in Abhängigkeit der Verfügbarkeit eines Radiofrequenzkanals in % angebendes Diagramm.

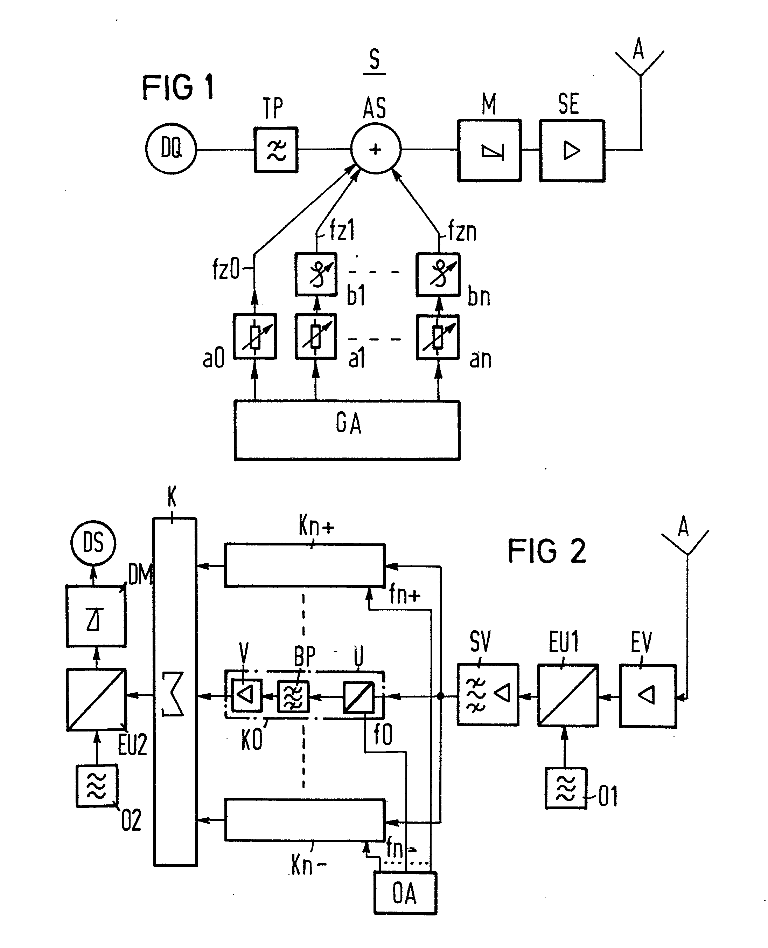

Die in Fig. 1 im Blockschaltbild dargestellte Sendeseite S weist eine Datenquelle DQ auf, die ausgangsseitig über den Tiefpaß TP mit der Addierstufe AS verbunden ist. Die Addierstufe AS erhält von der Generatoranordnung GA an ihren weiteren Eingängen eine Zusatzgrundschwingung mit der Frequenz $fz0$ sowie Zusatzoberschwingungen der Frequenzen $fz1$ fis $fzn$ zugeführt. In den Zuleitungen der Zusatzgrundschwingung und der Zusatzoberschwingungen sind einstellbare Dämpfungsglieder $a_0$, $a_1$ ... $a_n$ und in den Zuleitungen für die Zusatzoberschwingungen weiterhin einstellbare Phasendrehglieder $b_1$ ... $b_n$ angeordnet. Das Summensignal, bestehend aus dem von der Datenquelle DQ gelieferten digitalen Nutzsignal, der Zusatzgrundschwingung und den Zusatzoberschwingungen, wird dem Frequenzmodulator M eingangsseitig zugeführt, der aus einem in der Frequenz modulierbaren Hochfrequenzoszillator besteht. Dem Modulatorausgang ist die Senderendstufe SE nachgeschaltet, die vorzugsweise ein C-Verstärker ist. Die Senderendstufe SE arbeitet ausgangsseitig auf die Antenne A.

Die Dämpfungsglieder $a_0$, $a_1$ ... $a_n$ dienen der Einstellung des durch die Zusatzgrundschwingung und die Zusatzoberschwingungen jeweils bedingten Frequenzhubs. Die einstellbaren Phasendrehblieder $b_1$ ... $b_n$ dienen zusätzlich der Einstellung der Phase der Zusatzoberschwingungen. Die Frequenz $fz0$ der Zusatzgrundschwingung bestimmt den Abstand des modulatorausgangsseitigen radiofrequenten Frequenzrasters. Unter Berücksichtigung der die Frequenzmodulation beschreibenden Besselfunktionen sowie deren Phasen, läßt sich das modulatorausgangsseitige radiofrequente Frequenzraster so einstellen, daß sämtliche Rasterlinien im gegenseitigen Abstand der Frequenz $fz0$ gleiche Amplitude haben. Darüber hinaus können eine oder zwei der höchstwertigen Zusatzoberschwingungen auch dazu benutzt werden, durch entsprechende Einstellung ihrer Dämpfungsglieder und Phasendrehglieder unerwünschte Nebenspektrallinien des gewünschten radiofrequenten Frequenzrasters wenigstens annähernd zu kompensieren.

Das sendeseitig abgestrahlte frequenzmodulierte Frequenzspektrum, bei dem jeder radiofrequente Träger mit der digitalen Nutzinformation in der Frequenz moduliert ist, weist in seiner Hüllkurve keine Amplitudenmodulationsanteile auf, so daß sende- und empfangsseitig auch nichtlineare Verstärker verwendet werden können, ohne daß Verzerrungseffekte befürchtet werden müssen.

Das an der Antenne A des die Empfangsseite E darstellenden Blockschaltbildes nach Fig. 2 ankommende frequenzmodulierte Summensignal wird im Empfangsverstärker EV verstärkt, anschließend im ersten Empfangsumsetzer EU1 mit Hilfe der vom Oszillator U1 gelieferten Schwingung in eine niedere Frequenzlage umgesetzt und einem selektiven Verstärker SV zugeführt. Auf der Ausgangsseite des selektiven Verstärkers SV wird das empfangene umgesetzte frequenzmodulierte Signal auf eine der Anzahl der Rasterfrequenzen des Frequenzrasters entsprechende Anzahl von Kanälen aufgeteilt, in denen die frequenzmodulierten Trägerfrequenzen jeweils auf die gleiche Zwischenfrequenz umgesetzt werden. Hierzu besteht jeder dieser Kanäle $K_0$, $K_{1+}$ ... $K_{n+}$, $K_{1-}$ ... $K_{n-}$ aus einem eingangsseitigen Umsetzer U, dem ein Bandpaß BP und ein Verstärker V nachgeschaltet sind. Die zueinander kohärenten Umsetzschwingungen mit den Frequenzen $f_0$, $f_{1+}$ ... $f_{n+}$, $f_{1-}$ ... $f_{n-}$ liefert die Oszillatoranordnung OA. Der gegenseitige Frequenzabstand der Umsetzschwingungen ist dabei gleich der Frequenz fz0 der sendeseitigen Zusatzgrundschwingung. Die Kanäle $K_0$, $K_{1+}$ ... $K_{n+}$, $K_{1-}$ ... $K_{n-}$ werden ausgangsseitig im Kombinator K so zusammengefaßt, daß das Ausgangssummensignal einen optimalen Signal-Geräuschabstand aufweist. Das so gebildete Summensignal am Ausgang des Kombinators K wird im zweiten Umsetzer EU2 mit dem Umsetzoszillator O2 in die Basisbandlage umgesetzt, anschließend im Demodulator DM demoduliert und das so zurückgewonnene ursprüngliche digitale Nutzsignal der Datensenke DS zugeführt.

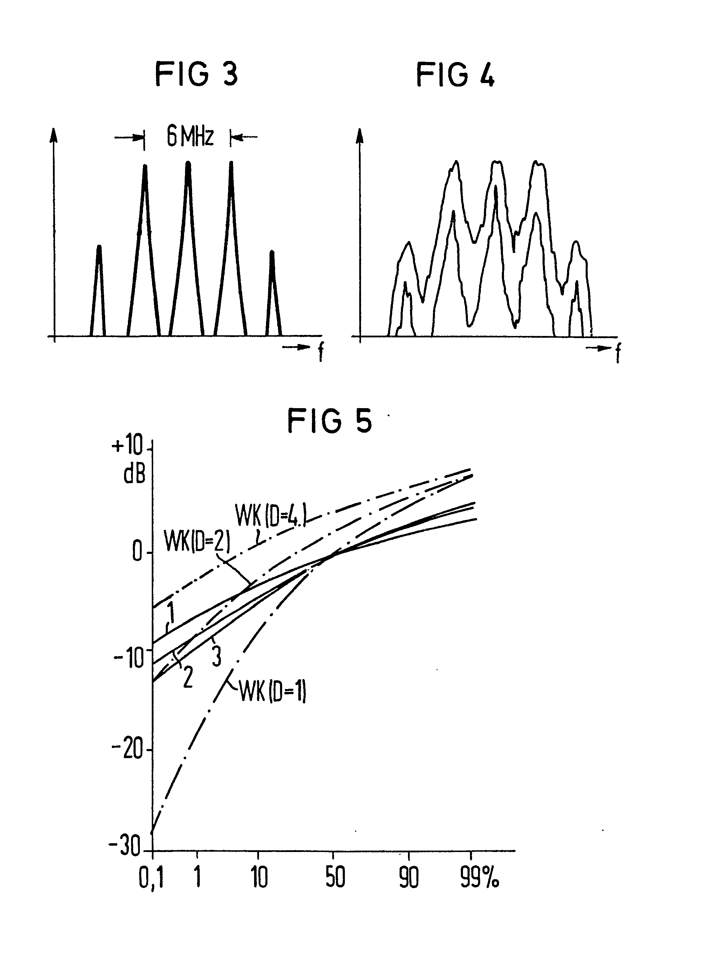

Fig. 3 zeigt das Spektraldiagramm am Ausgang des Frequenzmodulators M nach Fig. 1 für eine Zusatzgrundschwingung der Frequenz 3 MHz ohne Nutzsignal und ohne Zusatzoberschwingungen. Wie dieses Diagramm erkennen läßt, ergibt sich hierbei ein Frequenzraster aus Spektrallinien mit einem gegenseitigen Abstand von 3 MHz. Durch geeignete Einstellung des Frequenzhubes wird für drei Spektrallinien eine gleiche Amplitude erreicht, an die sich auf beiden Seiten eine um ca. 25 dB gedämpfte Nebenlinie anschließt. Durch entsprechende Einstellung des Frequenzhubes wäre es auch möglich, abgesehen von den gedämpften Nebenlinien, ein Frequenzraster mit zwei Spektrallinien im Abstand von 6 MHz zu erzeugen.

Das aus diesen drei Radiofrequenzen gleicher Amplitude als Nutzträger bestehende Frequenzraster mit einer Gesamtbreite von 6 MHz entspricht z. B. etwa der halben Kohärenzbandbreite einer Troposcatterverbindung. Auftretende selektive Pegeleinbrüche können somit nur einen der radiofrequenten Träger praktisch unterdrücken, während die beiden übrigen weitgehend ungestört bleiben.

Das in Fig. 4 gezeigte Signalspektrum entspricht dem nach Fig. 3 mit dem Unterschied, daß nunmehr das eigentliche Nutzsignal über die Addierstufe AS in Fig. 1 ebenfalls dem Frequenzmodulator zugeführt wird. Wie Fig. 4 erkennen läßt, ist jeder der radiofrequenten Träger im Abstand von 3 MHz in gleicher Weise mit dem Nutzsignal in der Frequenz moduliert.

Wie im Zusammenhang mit Fig. 1 und 2 dargelegt worden ist, können mit Hilfe von Zusatzoberschwingungen die Anzahl der im Frequenzraster vorhandenen radiofrequenten Träger auf fünf, sieben, neun usw. erhöht werden. Weiterhin ist es möglich, mit Hilfe von Zusatzoberschwingungen auch unerwünschte Nebenlinien des Spektrums, wie sie das Frequenzspektrum nach den Fig. 3 und 4 aufweist, wenigstens annähernd zu unterdrücken.

Die Aufteilung des digitalen Nutzsignals durch die erfindungsgemäße spezielle FM-Modulation auf beispielsweise drei äquidistante Radiofrequenzträger nach Fig. 3 und 4 bedingt eine Leistungsreduktion eines jeden Trägers um ca. 4,8 dB gegenüber der Verwendung eines Einzelträgers. Unter Berücksichtigung des niedrigeren Energieinhalts einer Spektrallinie (4,8 dB bei drei radiofrequenten Träger) sind im Diagramm der Fig. 5 Wahrscheinlichkeitskurven für den zu erwartenden Summen-Nutzpegel dargestellt. Das Diagramm nach Fig. 5 enthält zwei Gruppen von Kurvenscharen, die jeweils den zu erwartenden Signalpegel in Abhängigkeit der Kanalverfügbarkeit in den Grenzen von 0,1 bis 99 % aufzeigen. Die strichpunktierte Kurvenschar WK gibt Vergleichskurven eines üblichen mit und ohne Frequenz-Diversity arbeitenden Funksystems an, während die ausgezogenen mit 1, 2 und 3 bezeichneten Kurven die mit dem System nach der Erfindung erreichten Ergebnisse verdeutlichen.

Die Wahrscheinlichkeitskurve WK mit dem FDM-Diversitygrad D = 1 gibt den Verlauf des Raleighkanals an. Die entsprechende Wahrscheinlichkeitskurven WK für einen Diversitygrad D = 2 und einen Diversitygrad D = 4 zeigen die entsprechende Verbesserung des Empfangsverhaltens bei Anwendung eines zwei- oder vierfachen Frequenz-Diversitys. Die Kurven 1, 2 und 3 unterscheiden sich voneinander lediglich durch die belegte Spreizbandbreite. Bei der Kurve 1 beträgt die Spreizbandbreite 19 MHz, bei der Kurve 2 12 MHz und bei der Kurve 3 6 MHz. Wie dem Diagramm nach Fig. 5 zu entnehmen ist, lassen sich beim vorliegenden Beispiel mit einem drei Träger aufweisenden Frequenzraster bei 99,9 % Verfügbarkeit des Systems äquivalente FDM-Diversitygrade von D = 2 bis D = 3 realisieren. Die Reduktion des Schwundverhaltens gegenüber dem Raleighkanal beträgt dabei 15 bis 20 dB, so daß beim Ausführungsbeispiel lediglich mit 3 bis 8 dB Restschwund gerechnet zu werden braucht. Bei Verwendung von Frequenzrastern mit mehr als drei Radiofrequenzen, deren Frequenzbandbreite dann auch größer sein kann als die Hälfte einer Kohärenzbandbreite des Systems, läßt sich die Reduktion des Schwundverhaltens gegenüber dem Raleighkanal weiter verbessern.

**Patentansprüche**

1. Digitales Funksystem, insbesondere für Troposcatter- und Kurzwellenverbindungen, bei dem sendeseitig das digitale Nutzsignal zur Abstützung auf ein Frequenzraster mit wenigstens drei Radiofrequenzen zusammen mit wenigstens einer Zusatzschwingung, und zwar einer die Frequenz (fz0) des Rasterabstandes im radiofrequenten Frequenzraster festlegenden Zusatzgrundschwingung, dem Eingang des Frequenzmodulators (M) zugeführt ist und bei dem empfangsseitig die jeweils mit dem Nutzsignal modulierten radiofrequenten Träger des Frequenzrasters über einen Kombinator (K) hinweg zu einem einen optimalen Signal-Geräuschabstand aufweisenden Summensignal wiederum zusammengefaßt sind, dadurch gekennzeichnet, daß die radiofrequenten nutzsignalmodulierten Träger des Frequenzrasters unter Berücksichtigung der Besselfunktionen und deren Phase für wenigstens annähernd gleiche Amplituden dadurch festgelegt sind, daß die Zusatzgrundschwingung und weitere Zusatzoberschwingungen in der Amplitude und die Zusatzoberschwingungen zusätzlich auch in ihrer Phase einstellbar sind.

2. Digitales Funksystem nach Anspruch 1, dadurch gekennzeichnet, daß die empfangsseitig ankommenden nutzsignalmodulierten radiofrequenten Träger des Frequenzrasters zunächst in einer Umsetzoszillator-anordnung (OA) alle in eine gleiche Frequenzlage umgesetzt und anschließend vor ihrer Demodulation über den Kombinator (K) hinweg zum gewünschten Summensignal zusammengefaßt sind.

3. Digitales Funksystem nach Anspruch 1 oder 2, dadurch gekennzeichnet, daß wenigstens eine Zusatzoberschwingung zur Kompensation unerwünschter Nebenlinien des radiofrequenten Frequenzrasters vorgesehen ist.

4. Digitales Funksystem nach einem der vorhergehenden Ansprüche, dadurch gekennzeichnet, daß das radiofrequente Sendespektrum in seiner Breite in etwa gleich der halben auftretenden Kohärenzbandbreite ist.

**Claims**

1. A digital radio system, in particular for troposcatter- and short wave connections, wherein at the transmitting end the digital useful signal is fed to the input of the frequency modulator (M) in order that it be supported on a frequency raster comprising at least three radio frequencies together with at least one additional oscillation, and in fact an additional fundamental oscillation which determines the frequency (fz0) of the raster spacing in the radio-frequency frequency raster, and wherein at the receiving end the radio-frequency carriers of the frequency raster, each modulated with the useful signal, are combined via a combiner (K) to form a sum signal which exhibits an optimum signal-to-noise ratio, characterised in that the radio-frequency, useful-signal-modulated carriers of the frequency raster are determined, taking into account the Bessel functions and the phase thereof, for at least approximately equal amplitudes, in that the additional fundamental oscillation and further additional harmonics are adjustable in amplitude and the additional harmonics are additionally adjustable in phase.

2. A digital radio system as claimed in claim 1, characterised in that the useful-signal-modulated, radio-frequency carriers of the frequency raster incoming at the receiving end are firstly all converted in a converter oscillator arrangement (OA) into the same frequency position, and then, prior to their demodulation, are combined via the combiner (K) to form the desired sum signal.

3. A digital radio system as claimed in claim 1 or 2, characterised in that at least one additional harmonic is provided for the compensation of undesired secondary lines of the radio-frequency frequency raster.

4. A digital radio system as claimed in one of the preceding claims, characterised in that the radio-frequency transmission spectrum is approximately equal in breadth to half the occurring coherence bandwidth.

**Revendications**

1. Système radioélectrique numérique, en particulier pour liaisons troposhériques et à ondes courtes, dans lequel, côté émission, le signal utile numérique, en vue de l'appui sur une trame de fréquence avec au moins trois radiofréquences, est amené ensemble avec au moins une oscillation supplémentaire, à savoir une oscillation fondamentale supplémentaire fixant la fréquence (fz0) de l'écartement de trame dans la trame de fréquence à radiofréquence, à l'entrée du modulateur de fréquence (M) et dans lequel, côté réception, les porteuses à radiofréquence de la trame de fréquence, modulées chacune par le signal utile, sont réunies de nouveau au-delà d'un multiplexeur (K) en un signal somme présentant un rapport signal-sur-bruit optimal, caractérisé en ce que les porteuses à radiofréquence de la trame de fréquence, modulées par le signal utile, sont fixées, en tenant compte des fonctions de Bessel et de leur phase, pour des amplitudes au moins approximativement égales, par le fait que l'oscillation fondamentale supplémentaire et d'autres oscillations harmoniques supplémentaires sont réglables en amplitude et les oscillations harmoniques supplémentaires sont réglables en plus dans leur phase.

2. Système selon la revendication 1, caractérisé en ce que les porteuses à radiofréquence, modulées par le signal utile, arrivant côté réception, sont d'abord converties toutes en une même position en fréquence dans un dispositif oscillateur de conversion (OA) et sont ensuite, avant leur démodulation, réunies au-delà du multiplexeur (K) pour former le signal somme désiré.

3. Système selon la revendication 2 ou 3, caractérisé en ce qu'au moins une oscillation harmonique supplémentaire est prévue pour la compensation de lignes annexes indésirées de la trame de fréquence à radiofréquence.

4. Système selon une des revendications précédentes, caractérisé en ce que le spectre d'émission à radiofréquence correspond dans sa largeur à peu près à la moitié de la largeur de bande cohérente produite.

FIG 1

FIG 2

# FIG 3

6 MHz

→ f

# FIG 4

→ f

# FIG 5

+10 dB

0

-10

-20

-30

WK (D=4.)

WK(D=2)

WK (D=1)

1

2

3

0,1  1    10    50    90    99%

2